# EUROPEAN PATENT SPECIFICATION

(11) **EP 0 358 720 B1**
(45) Date of publication and mention of the grant of the patent: **02.03.1994**
(21) Application number: 88905147.0
(22) Date of filing: 16.05.1988
(51) Int. Cl.: B60P 3/34

(54) **VEHICLE WITH PIVOTAL COVER PANEL**
FAHRZEUG MIT DREHBAREM DECKEL
VEHICULE AVEC PANNEAU DE COUVERTURE PIVOTANT

(30) Priority: 15.05.1987 GB 8711473
(43) Date of publication of application: 21.03.1990
(73) Proprietor: EXPANDABLE VAN TOPS LTD., Winnipeg Manitoba R3B 0X3 (CA)
(72) Inventor: LANGE, Jack, Manitoba R3J 3G9 (CA)
(74) Representative: Lawrence, John Gordon
(86) International application number: US8801791
(87) International publication number: WO8808795

(56) References cited:
- EP-A- 0 090 487
- GB-A- 1 356 874
- US-A- 1 256 144
- US-A- 2 206 708
- US-A- 3 489 452
- US-A- 3 917 337
- US-A- 4 462 631

## Description

### BACKGROUND OF THE INVENTION

This invention relates to a recreational vehicle or camper with a pivotal cover panel of a type which in a normal closed position thereof lies over a substantially rectangular opening in the roof of the vehicle and can be moved by pivotal movement from the closed position to an open position in which the cover panel is inverted and extends outwardly to one side of the vehicle from one side edge of the opening. An enclosure member including a flexible cover fabric is secured by lower edges of the fabric to the vehicle at the opening and to the cover panel and includes a suitable support structure for the cover fabric so that it extends when erected in an arch construction over the opening and over the panel to allow access from inside the vehicle to the upper surface of the panel in the open position thereof.

Devices of this type are particularly but not exclusively used for opening roof sections of a van or similar device in which the cover panel normally closes the van top but can be opened and pivoted out to one side to define a cantilever deck with the enclosure defining a tent section enclosing the deck and an area thereabove allowing the accessibility through the opening in the roof of the van to the deck for example as a sleeping area. The device thus serves the purpose both of lifting the roof section of the van to a height above its normal height for example for standing within the van and in addition defines an additional area of the van which can be used generally as a sleeping area outside the normal van area but fully enclosed within the construction.

One example of a device of this general type is shownin European patent publication number 0090487 first published as an application in October 1983. The above patent showed for the first time the construction of a device of this type in which the cover panel when inverted in the open position was supported solely from the vehicle construction in cantilever manner by support hoops and cable arrangements.

This device while being a significant improvement over prior art arrangements does however have the disadvantages that it requires an initial crown piece to be attached to the roof of the vehicle so as to define a straight line on the vehicle which can provide the hinge about which the cover panel moves. It will be appreciated that in most vehicles of this type there are no straight lines in the vehicle roof construction and hence the formation of a straight hinge axis which is rigidly coupled to the vehicle is difficult and requires additional pieces. In addition the provision of the additional piece and its attachment to the cover panel requires that the cover panel in the open position pivots to a low height relative to the height of the vehicle.

It is one object of the present invention therefore, to provide a construction of a camper vehicle of the type disclosed in the above-mentioned document EP-A-0 090 487 which enables the cover panel to be coupled to the roof in a manner which avoids the direct hinged coupling thereof thus overcoming the above disadvantages.

The above European patent therefore discloses a camper vehicle comprising a body having sides, an end and a roof structure and having an having an opening in the roof structure, a cover panel having a closed position in which it extends across the roof structure covering the opening, pivot mounting means mounting the cover panel for pivotal movement relative to the roof structure from said closed position covering the opening to an open position in which the cover panel is inverted and extends outwardly to one side of the roof structure, and an enclosure member including a flexible cover fabric secured by lower edges thereof to the vehicle and to the cover panel and support means for the cover fabric such that the cover fabric extends in an arch construction over the opening and the panel to allow access to the upper surface of the panel in the open position thereon from the opening, said pivot mounting means including a first and second support structure spaced apart along one side of the panel.

U.S. Patent 3,489,452 discloses a trailer camper in which a cover panel can be pivoted through a 180^{o} from a closed position on top of a base portion outwardly toward one side. The panel is mounted upon a hinge line attached to a side of the base portion. The panel can be actuated by a lever mechanism which simply operates to force the panel from a closed position to the open position about the fixed hinge linge defined by the hinge mechanism.

According to the invention therefore the above camper device is characterized in that each of said support structures comprise a first lever having one end pivotally connected to said panel, a second lever having one end pivotally connected to said roof structure, and pivot coupling means connecting said first and second levers for pivotal movement relative to one another about an axis spaced from said roof structure and said cover panel, means interconnecting said first and second levers at a point along the length thereof intermediate said one end and said pivot coupling means and means for communicating force from said panel to said interconnecting means to cause said first and second levers to be forced apart.

Preferably the construction includes a cable or cables which extend from the vehicle to the outer edge of the cover panel and are raised away from the pivot axis by the levers and coupling arrangement so that the cables, levers and coupling arrangement act as a cantilever construction to support the cover panel in its open position.

Preferably at the same time the weight from the cover panel is applied to the levers to hold the first and second pairs of levers apart in the open position so that the edge of the cover panel adjacent the roof is supported outwardly away from the roof without the necessity for any direct coupling or direct supporting engagement between the roof and the cover panel.

Preferably the coupling means includes a third pair of levers and a fourth pair of levers with the third pair of levers being pivotally coupled to the first pair of levers for movement about an axis on said first pair of levers at an intermediate point along the length thereof and the fourth pair of levers coupled to the second pair of levers for pivotal movement relative thereto about an axis intermediate the length of the second pair of levers, the third and fourth pair of levers being interconnected for pivotal movement about an axis intermediate the first and second pairs of levers such that the third and fourth pairs of levers hold apart said first and second pairs of levers in said open position. This arrangement can provide a particularly effective lever construction in which the outer ends of the third and fourth levers provides the support for the cables while the weight from the roof panel is transmitted through the third and fourth levers to hold the first and second levers apart thus holding the cover panel away from the roof construction. This lever arrangement also enables the cover panel to be moved to the closed position about an imaginary pivot axis between the cover panel and the roof construction without any direct contact between the cover panel and the roof construction occuring during any part of the movement.

The use of the indirect hinging arrangement defined by this invention enables a sealing between the cover panel and the roof to be significantly improved since the cover panel is free to be pulled down along four sides onto the roof construction against a suitable sealing strip without the inhibition of a rigid hinge line which would inhibit movement toward the sealing strip. In this way an improved air tight seal can be obtained between the cover member and the roof construction which is of course very important when the vehicle is moving rapidly and generating high speed air currents across the roof construction.

The use of the indirect hinging arrangement using levers enables the lengths of the levers to be selected to position the cover panel at different spacing from the side of the opening in its open position. Thus, the height of the cover panel can be varied to give for example improved over head clearance for a person standing underneath the inverted cover apnel. Alternatively, the spacing of the edge of the panel from the side edge can be increased in cases where the cover panel is small, with an additional fold out flap being provided to bridge the space between the cover panel and the side edge giving an increase in the effective size of the cover panel.

With the foregoing in view, and other advantages as will become apparent to those skilled in the art to which this invention relates as this specification proceeds, the invention is herein described by reference to the accompanying drawings forming a part hereof, which includes a description of the best mode known to the applicant and of the preferred typical embodiment of the principles of the present invention, in which:

### DESCRIPTION OF THE DRAWINGS

Figure 1 is a rear elevational view of a vehicle including the pivotal cover panel according to the invention in an opened condition of the cover panel.

Figure 2 is a side elevational view of the device of Figure 1.

Figure 3 is a cross-sectional view similar to Figure 1 showing the cover panel in a closed condition.

Figure 4 is a rear elevational view similar to Figure 1 on an enlarged scale showing an alternative arrangement.

In the drawings like characters of reference indicate corresponding parts in the different figures.

### DETAILED DESCRIPTION

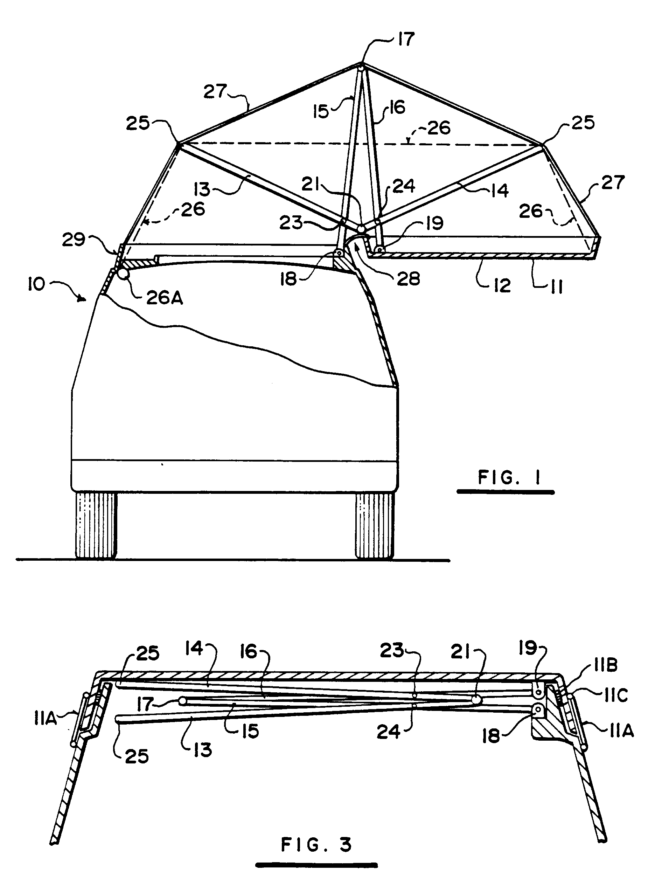

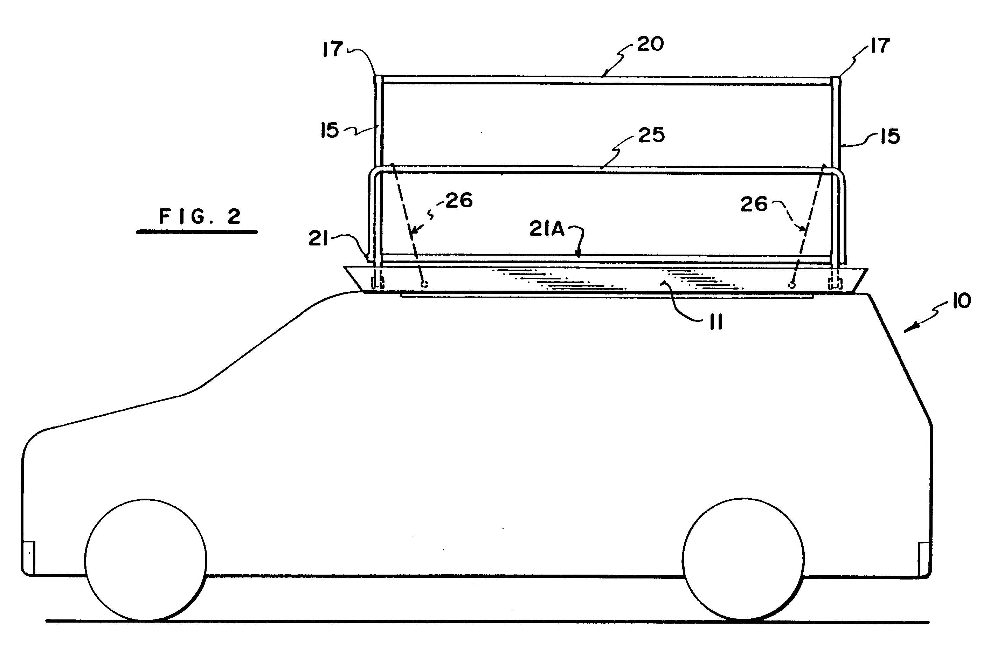

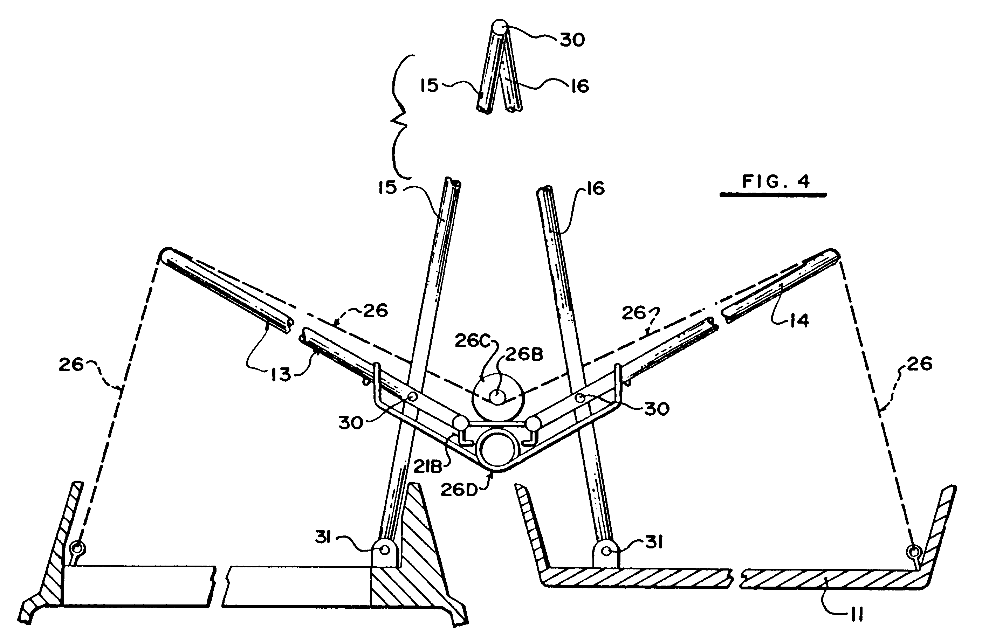

There is shown in Figure 1 and Figure 2 a vehicle 10 in the form of a van. The invention can be used with other main support structures for example trailers or camper tops of the type which can be carried on a pickup truck. A cover panel 11 is provided which in the closed condition shown in Figure 3 overlies an opening in the roof of the vehicle 10. The opening is generally rectangular in shape having longitudinal sides and transverse ends. The cover panel thus comprises a generally flat surface 12 and flanges which incline downwardly and outwardly therefrom in the closed position to form a roof covering. On the roof of the vehicle is mounted a base frame with upstanding sides which cooperate with the flanges of the cover panel in the closed position to form a seal. To improve the sealing effect, tie-down straps can be provided shown for example externally at 11A in Figure 3. These cooperate with sealing strips 11B provided on the outer surface of the sides 11C of the roof:

An interconnecting mechanism between the deck and the vehicle is provided by a plurality of pairs of rigid levers 13, 14 15 and 16. A first lever 15 is pivotally coupled to a second lever 16 at a coupling 17. The first lever 15 is pivotally coupled to a frame on the edge of the roof adjacent the cover panel as indicated at 18. The second lever 16 has its lower end pivotally coupled to the flat surface 12 of the deck as indicated at 19 at a position adjacent the inclined wall at the vehicle. It will be appreciated that the lever mechanisms shown at the rear of the vehicle in Figure 1 are duplicated at the front of the vehicle thus forming pairs of the levers and that a rigid strut or struts 20 interconnects the upper ends of the levers 15, 16 across an apex of the device as shown in Figure 2. The levers are shown schematically and in a preferred example comprise merely tubular support members of sufficient strength to accommodate the forces involved. The pivotal coupling of one lever to the next can be achieved simply by a transverse pin extending through aligned holes in the tubes as they cross. The pivot connection of an end of a lever can be formed by a clevis and a pin passing through a hole in the tube.

A third lever 13 and a fourth lever 14 have inner ends thereof pivotally connected at a coupling 21. A bar 21A extends longitudinally of the device as shown in Figure 2 connecting the couplings. Each of the levers 13 and 14 is pivotally connected to a respective one of the levers 15 and 16 at a position intermediate the length thereof as indicated at 23 and 24 respectively. From those pivot couplings the levers extend outwardly to an outer portion as shown at which each of the levers 13 and 14 is cranked at right angles to form an elongate connecting strut 25 extending along the length of the cover panel as shown in Figure 2.

A cable 26 has one end connected to a winch 26A carried on the roof of the vehicle at the edge of the opening remote from the cover panel in the open position thereof, passes upwardly around the strut 25 at the end of the lever 13, across from the end of the lever 13 to the end of the lever 14 and downwardly to couple with the edge of the cover panel remote from the roof of the vehicle. It will be noted from Figure 2 that the cable 26 commences at a position on the roof inwardly of the ends of the opening and then is inclined outwardly toward the end of the strut 25 on which it is clamped or located by a suitable connector (not shown) to assist in retaining stability of the structure in a longitudinal direction.

A tent or enclosure fabric is indicated at 27 and extends from the roof of the vehicle at the edge remote from the cover panel engaging over the struts 25 and 20 down to the edge of the cover panel at the upper edge of the sidewall thereof so as to provide a tent structure standing over the deck and the opening in the roof. A fabric connecting piece 28 is also provided between the inner edge of the cover panel at the upper edge of the sidewall thereof and the adjacent edge of the roof opening. End panels are also provided of the fabric material to fully enclose the area between the deck and the open roof. The tent construction and its attachment is not shown in detail as it will be known to one skilled in the art. It may include spring hoops which hold the fabric erected and can collapse with the fabric as the cover panel is closed.

Modifications to the roof merely require a crown piece 29 defined by upstanding and inwardly inclined sidewalls which match the sidewalls of the cover panel in the closed position. In addition a transverse reinforcing strut arranged at the front and the rear of the roof opening is necessary.

Turning now to Figure 4, there is shown on an enlarged scale a view similar to Figure 1 in which the device is slightly modified by the positioning of the winch at a central position rather than at the end of the cable.

In this arrangement the levers 13, 14, 15 and 16 are substantially as previously described. The transverse pins interconnecting the tubes forming the levers are indicated at 30 and the clevis on which the lower end of the levers is mounted is indicated at 31.

The transverse bar 21A is formed as an inverted channel member 21B to which the ends of the levers 13 and 14 are coupled. On the upper side of the bar 21B is mounted a shaft 26B onto which the cable 26 can be wrapped. In the position shown in Figure 4 the cable is substantially fully unwrapped and hence the cover panel 11 is in the open position. When the shaft 26B is rotated by way of a winch motor 26C, the cable is wound up so as to draw the cable inwardly onto the shaft and pull the cover panel gradually into the closed position illustrated in Figure 3. A coil spring 26D is positioned underneath the bar 21B and has legs which cooperate with the levers 13 and 14 respectively so as to maintain a bias against those levers into the open position thus enabling the cover panel to move to the open position as the cable is released by rotating the winch motor 26C. The levers 13 and 14 should in the open position have an angle greater than 90^{o} so that the weight applied upon the ends of the levers 13 and 14 by the cable 26 from the cover panel acts to hold the levers in the wide open position forcing the connections between the levers 15 and 16 apart to a maximum position determined by the full length of the cable 26. Thus the bar 21B is forced upwardly and the levers 15 and 16 forced outwardly to maintain the edge of the cover panel away from the edge of the roof both in the open position and as the cover panel gradually closes. In order for the winch shaft 26B to act upon the cable to draw in the device into the closed position, the shaft 26B must be positioned above the coupling the levers 13 and 14 and the bar 21B so that the levers can be drawn inwardly and the bar forced downwardly by rotation of the shaft 26B.

## Claims

1. A camper vehicle comprising a body (10) having sides, an end and a roof structure and having an opening in the roof structure, a cover panel (11) having a closed position in which it extends across the roof structure covering the opening, pivot mounting means (13,14,15,16) mounting the cover panel for pivotal movement relative to the roof structure from said closed position covering the opening to an open position in which the cover panel is inverted and extends outwardly to one side of the roof structure, and an enclosure member (27) including a flexible cover fabric secured by lower edges thereof to the vehicle and to the cover panel and support means for the cover fabric such that the cover fabric extends in an arch construction over the opening and the panel to allow access to the upper surface of the panel in the open position thereof from the opening, said pivot mounting means including a first and a second support structure spaced apart along one side of the panel, characterized in that each of said support structures comprise a first lever (16) having one end pivotally connected to said panel (11), a second lever (15) having one end pivotally connected to said roof structure (18), and pivot coupling means (17) connecting said first (16) and second (15) levers for pitoval movement relative to one another about an axis spaced from said roof structure and said cover panel such that the first and second levers act to support the panel during said pivotal movement of the panel and to define a pivot axis for said pivotal movement of the panel without a separate hinge mechanism, means (13,14) interconnecting said first and second levers (15,16) at a point along the length thereof intermediate said one end and said pivot coupling means (17) and means (26) for communicating force from said panel to said interconnecting means to cause said first and second levers (15,16) to be forced apart.

2. The invention according to Claim 1, wherein said communicating means (26) is responsive to movement of said panel to release said force.

3. The invention according to Claim 1 or 2 wherein said interconnecting means (13,14) is arranged to force said first and second levers apart while said cover panel is in said open position and while said cover panel moves from said open position toward said closed position and wherein said interconnecting means (13,14) is arranged to move to a collapsed condition in said closed position.

4. The invention according to Claim 1, 2 or 3 wherein the pivot coupling means (17) couples said first and second levers for pivotal amovement about a common pivot axis.

5. The invention according to any preceding claim wherein said interconnecting means (13,14) comprises a third lever (14) pivotally connected to one of the first and second levers at a point on the third lever intermediate an inner point (21) and an outer point (25) thereon, said communicating means being arranged to communicate force from said panel to said outer point (25).

6. The invention according to Claim 5 wherein said communicating means comprises a flexible elongate element (26) extending from said panel (11) at a positionn thereon spaced outwardly of said one end of the first lever (16) to said outer point (25) of the third lever such that the levers (14,15,16) and flexible elongate element (26) support the cover panel (11) in cantilever arrangement from said roof structure in the open position thereof..

7. The invention according to Claim 5 or 6 including a fourth lever (13) connected to said third lever (14) at the inner point (21) thereof and pivotally coupled to the other (15) of the first and second levers at a point (23) along the length of the other of the first and second levers intermediate said one end and said pivot coupling means and at a point on the fourth lever intermediate an inner point (21) and an outer point (25) thereon, the third and fourth levers (13,14) being interconnected at said inner points (21) thereof for pivotal movement each relative to the other about an axis which is intermediate the first and second levers and positioned such that the outer points (25) of the third and fourth levers (13,14) fold in a direction towards said pivot coupling means.

8. The invention according to Claim 6 including an elongate structural member (21A) extending from said inner points (21) of said third and fourth levers (13,14) of the first support structure to said inner points of said third and fourth levers of the second support structure.

9. The invention according to Claim 7 including elongate structural members (20,25) connecting outer ends of respective ones of said first, second, third and fourth levers of said one support structure to outer ends of respective ones of said first, second, third and fourth levers of said second support structure such that the elongate structural members define support elements for said flexible cover fabric (27).

10. The invention according to any preceding claim wherein the first and second levers (15,16) are arranged such that the height of the cover panel (11) in the open position is above that in the closed position.

## Patentansprüche

1. Campingfahrzeug, aufweisend einen Körper (10) mit Seiten, einem Ende und einer Dachstruktur sowie einer Öffnung in der Dachstruktur, eine Deckplatte (11) in einer Schließposition, in der sie sich die Öffnung abdeckend über die Dachstruktur erstreckt, eine Schwenkbefestigungsvorrichtung (13,14,15,16) zur Halterung der Deckplatte für eine Schwenkbewegung relativ zur Dachstruktur aus der die Öffnung abdeckenden Schließposition in eine Öffnungsposition, in der die Deckplatte umgewendet ist und sich zu einer Seite der Dachstruktur nach außen erstreckt, und ein Abschlußglied (27), das eine flexible Deckbespannung, die an ihren unteren Kanten am Fahrzeug und an der Deckplatte befestigt ist, und eine Stützvorrichtung für die Deckbespannung enthält, so daß sich diese in einer Bogenkonstruktion über die Öffnung und die Platte erstreckt, um einen Zugang von der Öffnung zu der oberen Oberfläche dar Platte in deren Öffnungsstellung zu ermöglichen, wobei die Schwenkbefestigungsvorrichtung eine erste und eine zweite Stützstruktur enthält, die im Abstand voneinander entlang einer Seite der Platte angeordnet sind,
**dadurch gekennzeichnet,**
daß jede der Stützstrukturen einen ersten Hebel (16), dessen eines Ende drehbar mit der Platte (11) verbunden ist, einen zweiten Hebel (15), dessen eines Ende drehbar mit der Dachstruktur (18) verbunden ist, Drehkupplungsmittel (17), die den ersten (16) und den zweiten (15) Hebel verbinden für eine Drehbewegung relativ zueinander um eine im Abstand von der Dachstruktur und der Deckplatte angeordnete Achse, derart, daß der erste und der zweite Hebel die Platte während deren Schwenkbewegung stützen und eine Schwenkachse für die Schwenkbewegung der Platte ohne einen getrennten Scharniermechanismus bestimmen, Mittel (13,14), die den ersten und zweiten Hebel (15,16) an einem Punkt entlang deren Länge zwischen dem genannten einen Ende und den Drehkupplungsmitteln (17) miteinander verbinden, und Mittel (26) zur Kraftübertragung von der Platte zu den Hebelverbindungsmitteln, um den ersten und den zweiten Hebel (15,16) auseinanderzuhalten, aufweist.

2. Erfindung nach Anspruch 1, worin die Mittel (26) zur Kraftübertragung auf die Bewegung der Platte zur Freigabe der Kraft ansprechen.

3. Erfindung nach Anspruch 1 oder 2, worin die Mittel (13,14) zur Verbindung der Hebel so angeordnet sind, daß sie den ersten und den zweiten Hebel auseinanderdrücken, während sich die Deckplatte in der Öffnungsposition befindet, und während sich die Deckplatte aus der Öffnungsposition in die Schließposition bewegt, und worin die Mittel (13,14) zur Verbindung der Hebel so angeordnet sind, daß sie sich in einen zusammengeklappten Zustand in der Schließposition bewegen.

4. Erfindung nach Anspruch 1, 2 oder 3, worin die Drehkupplungsmittel den ersten und den zweiten Hebel für eine Drehbewegung um eine gemeinsame Drehachse koppeln.

5. Erfindung nach einem der vorhergehenden Ansprüche, worin die Mittel (13,14) zur Verbindung der Hebel einen dritten Hebel (14) aufweisen, der drehbar mit dem einen vom ersten oder zweiten Hebel an einer Stelle des dritten Hebels zwischen einem inneren Punkt (21) und einem äußeren Punkt (25) auf diesem verbunden ist, wobei die Mittel zur Kraftübertragung die Kraft von der Platte zu dem äußeren Punkt (25) übertragen.

6. Erfindung nach Anspruch 5, worin die Mittel zur Kraftübertragung ein flexibles langgestrecktes Element (26) aufweisen, das sich von der Platte (11) an einer Stelle auf dieser, die im Abstand außerhalb des genannten einen Endes des ersten Hebels (16) angeordnet ist, zu dem äußeren Punkt (25) des dritten Hebels erstreckt, derart, daß die Hebel (14,15,16) und das flexible langgestreckte Element (26) die Deckplatte (11) in deren Öffnungsposition in einer Auslegeranordnung von der Dachstruktur stützen.

7. Erfindung nach Anspruch 5 oder 6, enthaltend einen vierten Hebel (13) dermit dem dritten Hebel (14) an dessen innerem Punkt (21) verbunden ist und drehbar mit dem anderen (15) vom ersten oder zweiten Hebel an einer Stelle (23) entlang der Länge des anderen vom ersten oder zweiten Hebel zwischen dem einen Ende und den Drehkupplungsmitteln und an einer Stelle auf dem vierten Hebel zwischen einem inneren Punkt (21) und einem äußeren Punkt (25) auf diesem gekoppelt ist, wobei der dritte und der vierte Hebel (13,14) an ihren inneren Punkten (21) miteinander verbunden sind für eine Drehbewegung relativ zueinander um eine Achse, die zwischen dem ersten und dem zweiten Hebel liegt und so positioniert ist, daß die äußeren Punkte (25) des dritten und vierten Hebels (13,14) in einer Richtung zu den Drehkupplungsmitteln zusammengehen.

8. Erfindung nach Anspruch 6, enthaltend ein langgestrecktes Strukturglied (21A), das sich von den inneren Punkten (21) des dritten und vierten Hebels (13,14) der ersten Stützstruktur zu den inneren Punkten des dritten und vierten Hebels der zweiten Stützstruktur erstreckt.

9. Erfindung nach Anspruch 7, enthaltend langgestreckte Strukturglieder (20,25), die äußere Enden jeweils des ersten, zweiten, dritten oder vierten Hebels der einen Stützstruktur mit äußeren Enden jeweils des ersten, zweiten, dritten oder vierten Hebels der zweiten Stützstruktur verbinden, derart, daß die langgestreckten Strukturglieder Stützelemente für die flexible Deckbespannung (27) bilden.

10. Erfindung nach einem der vorhergehenden Ansprüche, worin der erste und zweite Hebel (15,16) so angeordnet sind, daß die Höhe der Deckplatte (11) in der Öffnungsposition über der in der Schließposition ist.

## Revendications

1. Véhicule de camping, comprenant une carrosserie (10) ayant des côtés, une extrémité et une structure de toit et délimitant une ouverture dans la structure de toit, un panneau (11) de couverture ayant une position fermée dans laquelle il est disposé au-dessus de la structure de toit et recouvre l'ouverture, un dispositif (13, 14, 15, 16) de montage à pivot destiné à supporter le panneau de couverture afin qu'il puisse pivoter par rapport à la structure de toit d'une position fermée dans laquelle il recouvre l'ouverture à une position ouverte dans laquelle le panneau de couverture est retourné et dépasse vers l'extérieur d'un côté de la structure de toit, et un organe (27) formant une enceinte, comprenant une étoffe souple de couverture fixée par ses bords inférieurs au véhicule et au panneau de couverture, et un dispositif de support de l'étoffe de couverture afin que l'étoffe de couverture soit disposée avec une construction en arceau au-dessus de l'ouverture et du panneau et donne accès à la surface supérieure du panneau dans la position ouverte de celui-ci et à partir de l'ouverture, le dispositif de montage à pivot comprenant une première et une seconde structure de support qui sont espacées le long d'un côté du panneau, caractérisé en ce que chacune des structures de support comporte un premier levier (16) dont une première extrémité est articulée sur le panneau (11), un second levier (15) dont une extrémité est articulée sur la structure de toit (18), un dispositif d'accouplement pivotant (17) qui raccorde le premier levier (16) et le second levier (15) afin qu'ils pivotent l'un par rapport à l'autre autour d'un axe distant de la structure de toit et du panneau de couverture, si bien que le premier et le second levier assurent le support du panneau pendant le mouvement de pivotement du panneau et forment un axe de pivotement pour le mouvement de pivotement du panneau sans mécanisme séparé à charnière, un dispositif (13, 14) raccordant le premier et le second levier (15, 16) en un point de sa longueur entre ladite extrémité et le dispositif d'accouplement pivotant (17), et un dispositif (26) destiné à communiquer la force du panneau au dispositif de raccordement et à provoquer un écartement à force du premier et du second levier (15, 16).

2. Invention selon la revendication 1, dans laquelle le dispositif de communication (26) est commandé par le mouvement du panneau pour la suppression de ladite force.

3. Invention selon la revendication 1 ou 2, dans laquelle le dispositif de raccordement (13, 14) est réalisé afin qu'il écarte à force le premier et le second levier lorsque le panneau de couverture est dans la position ouverte et lorsque le panneau de couverture se déplace de la position ouverte vers la position fermée, et dans laquelle le dispositif de raccordement (13, 14) est destiné à se déplacer vers un état plié en position fermée.

4. Invention selon la revendication 1, 2 ou 3, dans laquelle le dispositif d'accouplement pivotant (17) assure l'accouplement du premier et du second levier afin qu'ils pivotent autour d'un axe commun.

5. Invention selon l'une quelconque des revendications précédentes, dans laquelle le dispositif de raccordement (13, 14) comporte un troisième levier (14) articulé sur l'un des premier et second leviers en un point du troisième levier qui est compris entre un point interne (21) et un point externe (25) du levier, le dispositif de communication étant destiné à communiquer la force du panneau au point externe (25).

6. Invention selon la revendication 5, dans laquelle le dispositif de communication comporte un élément souple allongé (26) dépassant du panneau (11) à un emplacement de celui-ci distant vers l'extérieur de ladite extrémité du premier levier (16) vers le point externe (25) du troisième levier, afin que les leviers (14, 15, 16) et l'élément souple allongé (26) supportent le panneau de couverture (11) en porte-à-faux sur la structure de toit dans sa position ouverte.

7. Invention selon la revendication 5 ou 6, comprenant un quatrième levier (13) raccordé au troisième levier (14) à son point interne (21) et articulé sur l'autre (15) des premier et second leviers en un point (23) de la longueur de l'autre des premier et second leviers entre la première extrémité et le dispositif d'accouplement pivotant et en un point du quatrième levier compris entre un point interne (21) et un point externe (25) de ce levier, le troisième et le quatrième levier (13, 14) étant raccordés à leurs points internes (21) afin qu'ils pivotent l'un par rapport à l'autre autour d'un axe qui est compris entre le premier et le second levier et qui est disposé afin que les points externes (25) du troisième et du quatrième levier (13, 14) se replient vers le dispositif d'accouplement pivotant.

8. Invention selon la revendication 6, comprenant un organe résistant allongé (21A) disposé des points internes (21) du troisième et du quatrième levier (13, 14) de la première structure de support aux points internes du troisième et du quatrième levier de la seconde structure de support.

9. Invention selon la revendication 7, comprenant des organes résistants allongés (20, 25) raccordant les extrémités externes de leviers respectifs parmi le premier, le second, le troisième et le quatrième levier de la première structure de support aux extrémités externes des leviers respectifs parmi le premier, le second, le troisième et le quatrième levier de la seconde structure de support, afin que les organes résistants allongés forment des éléments de support pour l'étoffe souple (27) de couverture.

10. Invention selon l'une quelconque des revendications précédentes, dans laquelle le premier et le second levier (15, 16) sont disposés afin que la hauteur du panneau (11) de couverture en position ouverte, soit supérieure à celle de la position fermée.
